# EUROPÄISCHE PATENTSCHRIFT

(11) **EP 2 251 572 B1**
(45) Veröffentlichungstag und Bekanntmachung des Hinweises auf die Patenterteilung: **03.07.2013**
(21) Anmeldenummer: 09006122.7
(22) Anmeldetag: 05.05.2009
(51) Int. Cl.: F16J 15/32

(54) **Dichtungsanordnung**
Seal arrangement
Agencement d'étanchéification

(43) Veröffentlichungstag der Anmeldung: 17.11.2010
(60) Teilanmeldung: 10005396.6
(73) Patentinhaber: Carl Freudenberg KG, 69469 Weinheim (DE)
(72) Erfinder: Colineau, François, 69469 Weinheim (DE); Hintenlang, Günter, 69518 Abtsteinnach (DE)

(56) Entgegenhaltungen:
- DE-A1- 3 838 760
- DE-A1- 10 325 254
- DE-A1-102004 012 221

## Beschreibung

### Technisches Gebiet

Die Erfindung betrifft eine Dichtungsanordnung, umfassend einen Dichtring, der stirnseitig einerseits eine erste Dichtlippe aufweist, die eine Durchbrechung umschließt, wobei die Durchbrechung von einem Verschlussdeckel verschlossen ist.

### Stand der Technik

Derartige Dichtungsanordnungen sind allgemein bekannt, zum Beispiel aus den Dokumenten DE 103 25 254 A, DE 10 2004 012 221 A und DE 38 38 760 A1. Die Dichtungsanordnungen sind in Maschinenelementen, beispielsweise in Bohrungen von Getriebegehäusen, eingesetzt, wobei der Verschlussdeckel der Dichtungsanordnung dafür sorgt, dass Verunreinigungen, zum Beispiel während des Transports des Maschinenelements oder dessen Lagerung, aus dem abzudichtenden Raum fern gehalten werden. Außerdem soll durch den Verschlussdeckel zum Beispiel Öl, das in den abzudichtenden Raum eingefüllt ist, während des Transports darin zurückgehalten werden.
Dabei ist allerdings zu beachten, dass der Verschlussdeckel die erste Dichtlippe berührt und die erste Dichtlippe dadurch verformt und / oder aufgedehnt wird. Dadurch besteht die Gefahr, dass der Werkstoff, aus dem die erste Dichtlippe besteht, relaxiert und / oder die Form der ersten Dichtlippe nachteilig verändert wird. Im Anschluss an die Entfernung des Verschlussdeckels wird zum Beispiel eine abzudichtende Welle in die Durchbrechung eingeführt, wobei die Welle, wegen der aufgedehnten ersten Dichtlippe, nicht mehr ausreichend geführt und vorzentriert wird und dadurch eine axial hinter der ersten Dichtlippe angeordnete zweite Dichtlippe während der Montage der Welle beschädigt werden kann. Außerdem kann es durch die Verformung/Aufdehnung der ersten Dichtlippe, von der die abzudichtende Welle unter elastischer Vorspannung dichtend umschlossen werden soll, zu Undichtigkeiten kommen.

### Darstellung der Erfindung

Der Erfindung liegt die Aufgabe zugrunde, dass die zuvor genannten Nachteile vermieden werden, insbesondere dass die erste Dichtlippe durch den Verschlussdeckel weder verformt noch aufgedehnt werden soll.

Diese Aufgabe wird erfindungsgemäß durch eine Dichtungsanordnung nach Anspruch 1 gelöst
Auf vorteilhafte Ausgestaltungen nehmen die Unteransprüche Bezug.

Zur Lösung der Aufgabe ist eine Dichtungsanordnung vorgesehen, wie eingangs beschrieben, wobei der Verschlussdeckel der ersten Dichtlippe unmittelbar benachbart zugeordnet ist und wobei
die erste Dichtlippe den Verschlussdeckel ohne elastische Vorspannung lose anliegend berührt.
Durch die lose Berührung von erster Dichtlippe und Verschlussdeckel kann die erste Dichtlippe durch den Verschlussdeckel weder verformt noch aufgedehnt werden. Die erste Dichtlippe behält in der Dichtungsanordnung solange ihre herstellungsbedingte Form, bis das abzudichtende Bauteil, z.B. eine Welle, montiert und von der ersten Dichtlippe anschließend dichtend umschlossen ist. Vor der Montage des abzudichtenden Bauteils wird der Verschlussdeckel aus der Dichtungsanordnung entfernt.

Zuvor hat der Verschlussdeckel während des Transports oder der Lagerung, beispielsweise eines Getriebegehäuses, dafür gesorgt, dass durch die Bohrung, durch die später eine Welle verläuft, keine Verunreinigungen in den abzudichtenden Raum gelangen.

Während der Montage einer abzudichtenden Welle wird diese in die Durchbrechung eingeführt und durch die erste Dichtlippe vorzentriert. Dadurch nimmt die Welle eine günstige Position bezogen auf eine zweite Dichtlippe ein, die der ersten Dichtlippe in Montagerichtung benachbart zugeordnet ist. Die Gefahr einer Beschädigung der zweiten Dichtlippe ist durch die Vorzentrierung weit reduziert.

Bei montierter Welle berührt die erste Dichtlippe die abzudichtende Oberfläche der abzudichtenden Welle dann mit gleichmäßigem Anpressdruck entlang des gesamten Umfangs, so dass der Dichtring während seiner bestimmungsgemäßen Verwendung ausgezeichnete Gebrauchseigenschaften während einer langen Gebrauchsdauer aufweist.

Der Verschlussdeckel und der Dichtring können zerstörungsfrei lösbar miteinander verbunden sein. Hierbei ist von Vorteil, dass der Dichtring bei Entfernung des Verschlussdeckels aus der Dichtungsanordnung dadurch nicht beschädigt wird. Außerdem kann der Verschlussdeckel anschließend sortenrein entsorgt und recycelt werden.

Der Verschlussdeckel besteht bevorzugt aus einem polymeren Werkstoff. Dadurch ist er leicht und rostfrei.

Der Verschlussdeckel und der Dichtring können formschlüssig miteinander verbunden sein. Eine formschlüssige Verbindung ist, im Vergleich zu einer kraftschlüssigen Verbindung, von Vorteil, weil die Montage der Dichtungsanordnung dadurch vereinfacht ist. Sind der Verschlusedeckel und der Dichtring formschlüssig miteinander verbunden, besteht keine Ungewissheit, ob die beiden Teile tatsächlich ordnungsgemäß haltbar aneinander festgelegt sind. Bei kraftschlüssigen Verbindungen hängt die Haltbarkeit der Verbindung demgegenüber von der Kraft ab, mit dem die beiden Teile ineinander gefügt werden. Differiert die Fügekraft, resultiert daraus eine mehr oder weniger haltbare Verbindung, was im Hinblick auf die Prozesssicherheit nachteilig ist.

Nach einer vorteilhaften Ausgestaltung kann es vorgesehen sein, dass der Dichtring einen sich in axialer Richtung erstreckenden Axialflansch aufweist, der den Verschlussdeckel außenumfangsseitig umschließt und zumindest einen sich radial nach innen erstreckenden Rastvorsprung aufweist, der zumindest in eine Hinterschneidung des Verschlussdeckels einschnappbar ist. Am Axialflansch kann am freien stimseitigen Ende eine Axialdichtlippe angeordnet sein. Der Rastvorsprung kann durch einen umfangsseitig umlaufenden, in sich geschlossenen Wulst gebildet sein, der in eine umfangsseitig umlaufende, in sich geschlossene nutförmige Hinterschneidung des Verschlussdeckels einschnappt. Der Verschlussdeckel ist dadurch während der Herstellung der Dichtungsanordnung leicht mit dem Dichtring zu verbinden und später, auch wieder leicht zu trennen.

Der Axialflansch kann in Montagerichtung des Verschlussdeckels eine Einführschräge aufweisen. Dadurch wird die Zentrierung des Verschlussdeckels relativ zum Dichtring weiter vereinfacht, ebenso wie die Montage der Dichtungsanordnung. Die Einführungsschräge bildet außerdem eine erste Vorzentrierung bei Montage des abzudichtenden Maschinenelements in den Dichtring, bevor eine zweite Vorzentrierung durch die erste Dichtlippe erfolgt. Eine in Montagerichtung des Maschinenelements axial nach der ersten Dichtlippe angeordnete zweite Dichtlippe wird dadurch vor montagebedingten Beschädigungen gut geschützt.

Der Axialflansch kann aus einem elastomeren Werkstoff bestehen.

Der Verschlussdeckel kann einen Radialflansch aufweisen, mit dem der Verschlussdeckel im Axialflansch des Dichtrings gehalten ist, wobei der Radialflansch der ersten Dichtlippe mit einem ersten axialen Abstand = 0 benachbart zugeordnet ist. Der Radialflansch verschließt die Durchbrechung und berührt die erste Dichtlippe lose anliegend, ohne die erste Dichtlippe zu verformen, so dass eine unerwünschte Verformung/Aufdehnung der ersten Dichtlippe durch den Verschlussdeckel ausgeschlossen ist.

Bei einem derartigen ersten axialen Abstand ist von Vorteil, dass die Dichtungsanordung insgesamt geringe Abmessungen in axialer Richtung aufweist.
Die erste Dichtlippe kann aus einem polymeren Werkstoff bestehen. Polymere Werkstoffe reagieren bezüglich ihrer Rückstellung in die herstellungsbedingte Form empfindlicher auf Verformungen und / oder Aufdehnungen, als elastomere Werkstoffe, so dass die lose anliegende Berührung des Verschlussdeckels und der ersten Dichtlippe speziell dann besonders vorteilhaft ist, wenn die Dichtlippe aus einem polymeren Werkstoff besteht.
Werden polymere Werkstoffe längere Zeit im verformten Zustand gehalten und / oder aufgedehnt, kehren sie nur schwer, wenn überhaupt, in ihre herstellungbedingte Form zurück, was dann zu einer nur ungenügenden Vorzentrierung des abzudichtenden Maschinenelements bei dessen Montage und zu unerwünschten Undichtigkeiten führen kann.

Die erste Dichtlippe kann aus PTFE bestehen und herstellungsbedingt eben und kreisringförmig ausgebildet sein und sich parallel zum Radialflansch erstrecken. Im Anschluss an die Entfernung des Verschlussdeckels kann eine abzudichtende Welle durch die Durchbrechung hindurchgeführt werden, wobei während des Montagevorgangs die herstellungsbedingt ebene und radial nach innen gerichtete erste Dichtlippe die Welle zunächst, bezogen auf die Dichtungsanordnung, vorzentriert und dann trompetenförmig in axialer Richtung verformt wird. Anschließend umschließt die erste Dichtlippe die abzudichtende Oberfläche der abzudichtenden Welle dichtend.

Der erste axiale Abstand kann bei einer derartigen Ausgestaltung der ersten Dichtlippe der Dicke der ersten Lippe entsprechen.

Der Radialflansch kann auf der der ersten Lippe axial abgewandten Seite einen Axialvorsprung aufweisen, auf den eine weitere entsprechend ausgebildete Dichtungsanordnung gleichen Typs kraftschlüssig aufschiebbar ist. Eine derartige Ausgestaltung der Dichtungsanordnung ist für die Verpackung mehrerer Dichtungsanordnungen gleichen Typs von Vorteil. Durch das gegenseitige Aufschieben werden die Dichtungsanordnungen miteinander verbunden und bilden dadurch eine vormontierbare Einheit, die es erleichtert, mehrere Dichtungsanordnungen gleichen Typs platzsparend und sicher zu verpacken. Die Einheiten, die verpackt werden, können bevorzugt aus zwei bis fünf Dichtungsanordnungen gleichen Typs bestehen.

Der Dichtring kann als Radialwellendichtring ausgebildet sein, mit einem Stützkörper aus einem zähharten Werkstoff, der stimseitig andererseits mit einer dynamisch beanspruchten zweiten Dichtlippe aus elastomerem Werkstoff verbunden ist, wobei sich die erste Dichtlippe und die zweite Dichtlippe mit einem zweiten axialen Abstand benachbart zugeordnet sind. Die zweite Dichtlippe kann, wie bei einem üblichen Radialwellendichtring, aus einem elastomerem Werkstoff bestehen und mit oder ohne Ringwendelfeder ausgebildet sein. Die zweite Dichtlippe und der Axialflansch sind bevorzugt einstückig ineinander übergehend und materialeinheitlich ausgebildet. Die Herstellung des Dichtrings, der einen Bestandteil der Dichtungsanordnung bildet, ist dadurch wesentlich vereinfacht; die Dichtungsanordnung ist dadurch besonders kostengünstig herstellbar.

Die erste Dichtlippe kann durch an sich bekannte Fertigungsverfahren in der Dichtungsanordnung festgelegt sein.

### Kurzbeschreibung der Zeichnung

Ein Ausführungsbeispiel der erfindungsgemäßen Dichtungsanordnung wird nachfolgend anhand der Figuren 1 bis 3 näher erläutert.

Diese zeigen:
- Fig. 1: ein Ausführungsbeispiel einer erfindungsgemäßen Dichtungsanordnung in geschnittener Darstellung,
- Fig. 2: eine perspektivische Ansicht der Dichtungsanordnung aus Fig. 1,
- Fig. 3: drei Dichtungsanordnungen, wie in Fig. 1 dargestellt, die eine Einheit für eine Verpackung bilden.

### Ausführung der Erfindung

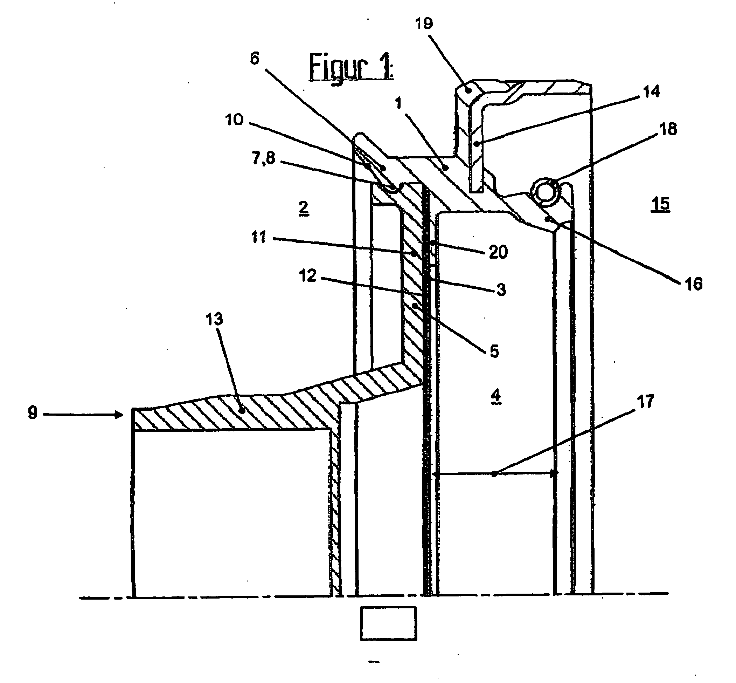

In Fig. 1 ist ein Ausführungsbeispiel einer Dichtungsanordnung gezeigt, die einen Dichtring 1 und einen Verschlussdeckel 5 umfasst.

Der Dichtring 1 ist als Radialwellendichtring ausgebildet und umfasst einen Stützkörper 14, der in dem hier gezeigten Ausführungsbeispiel aus einem metallischen Werkstoff besteht. Die zweite Dichtlippe 16 besteht aus einem elastomeren Werkstoff und ist von einer Ringwendelfeder 18 außenumfangsseitig umschlossen. Die statische Dichtung 19 dichtet gegenüber einem hier nicht dargestellten Gehäuse, beispielsweise einem Getriebegehäuse, ab und ist einstückig und materialeinheitlich mit der zweiten Dichtlippe 16 ausgebildet.

Der Dichtring 1 weist außerdem eine erste Dichtlippe 3 aus PTFE auf, die der zweiten Dichtlippe 16 mit einem zweiten axialen Abstand 17 benachbart zugeordnet ist. Die erste Dichtlippe 3 ist an einem Befestigungsabschnitt 20 des Dichtrings 1 festgelegt.

Um den Verschlussdeckel 5 am Dichtring 1 befestigen zu können, weist der Dichtring 1 einen sich in axialer Richtung erstreckenden Axialflansch 6 auf, der ebenfalls, wie die zweite Dichtlippe 16, die statische Dichtung 19 und der Befestigungsabschnitt 20 aus elastomerem Werkstoff besteht und einstückig in einander übergehend und materialeinheitlich mit den genannten Teilen ausgebildet ist. Der Axialflansch 6 umschließt den Verschlussdeckel 5 außenumfangsseitig und weist einen sich radial nach innen erstreckenden wulstförmigen Rastvorsprung 7 auf, der in eine kongruent gestaltete nutförmige Hinterschneidung 8 eingeschnappt ist. Um den Verschlussdeckel 5 leichter mit dem Dichtring 1 verbinden zu können, ist der Axialflansch 6 mit einer Einführschräge 10 versehen. Während der Montage des Verschlussdeckels 5 in Montagerichtung 9 mit dem Dichtring 1 werden diese beiden Teile durch die Einführschräge 10 selbsttätig zueinander zentriert. Durch die formschlüssig Verbindung von Verschlussdeckel 5 und Dichtring 1 miteinander, sind Verschlussdeckel 5 und Dichtring 1 zerstörungsfrei lösbar miteinander verbunden.

Die erste Dichtlippe 3 ist in Fig. 1 im herstellungsbedingten Zustand gezeigt. Die erste Dichtlippe 3 ist herstellungsbedingt eben und kreisringförmig ausgebildet und erstreckt sich parallel zum Radialflansch 11. Erfindungswesentlich ist es vorgesehen, dass der Radialflansch 11 die erste Dichtlippe 3 im hier dargesteilten Zustand nur lose anliegend berührt, ohne die Dichtlippe 3 zu verformen; der Verschlussdeckel 5 ist der ersten Dichtlippe 3 unmittelbar benachbart und lose anliegend zugeordnet. Diese unmittelbar benachbarte und lose anliegende Zuordnung von Verschlussdeckel 5 und erster Dichtlippe 3 hat den Vorteil, dass die erste Dichtlippe 3 durch den Verschlussdeckel nicht verformt und / oder aufgedehnt wird. Speziell dann, wenn die erste Dichtlippe 3 aus PTFE besteht, wäre eine Deformierung durch den Verschlussdeckel besonders nachteilig, weil sich die erste Dichtlippe 3 bei Entfernung des Verschlussdeckels aus der Dichtungsanordnung nicht mehr vollständig in ihre herstellungsbedingte Form begeben würde. Die Vorzentrierung einer Welle bei Einführung in die Dichtungsanordnung wäre dann beeinträchtigt, und während der bestimmungsgemäßen Verwendung des Dichtrings würde durch die Deformierung die Gefahr bestehen, dass die erste Dichtlippe nicht mehr ordnungsgemäß am abzudichtenden Bauteil anliegt und es dadurch zu Undichtigkeiten in diesem Bereich kommt. Durch den nur sehr geringen ersten axialen Abstand 12 werden kompakte Abmessungen der Dichtungsanordnung in axialer Richtung gewährleistet.

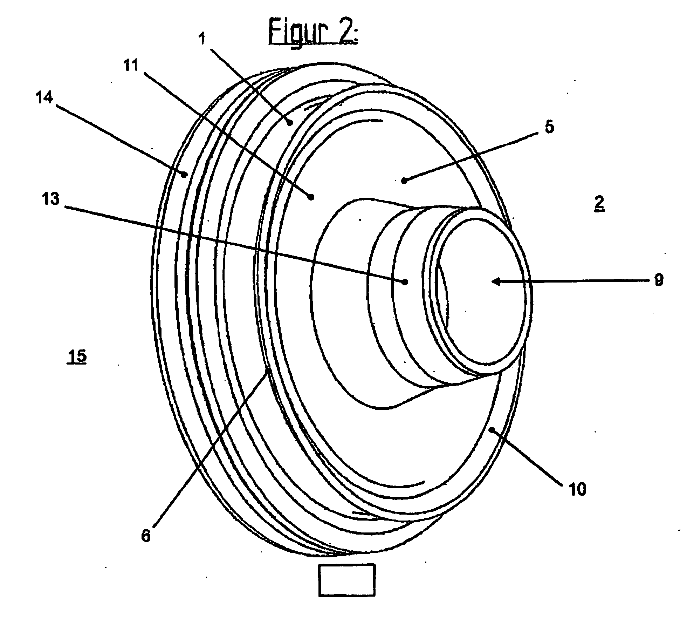

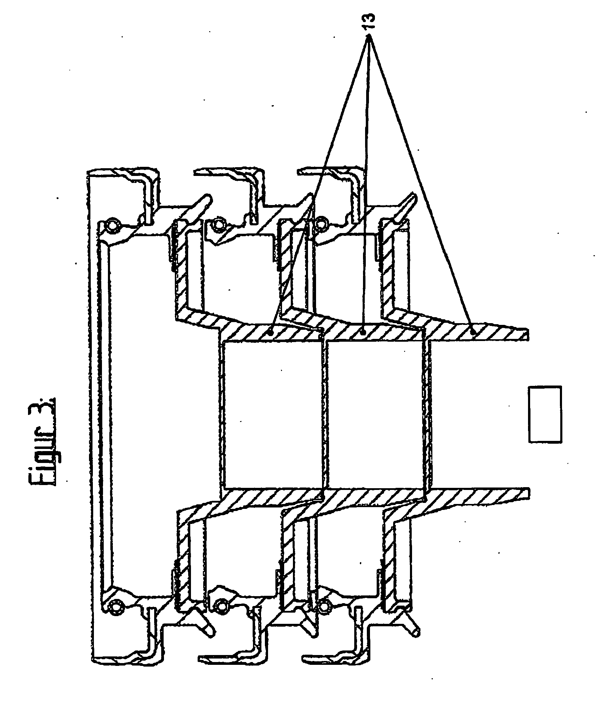

In Fig. 2 ist die Dichtungsanordnung aus Fig. 1 in einer perspektivischen Ansicht gezeigt. Der Radialflansch 11 weist einen Axialvorsprung 13 auf, auf den eine weitere entsprechend ausgebildete Dichtungsanordnung gleichen Typs kraftschlüssig aufschiebbar ist. Eine solche Einheit, bestehend aus mehreren Dichtungsanordnungen gleichen Typs, ist in Fig. 3 gezeigt.

In Fig. 3 sind drei der erfindungsgemäßen Dichtungsanordnungen entsprechend den Fig. 1 und 2 zum Zwecke der besseren Verpackung als Einheit kraftschlüssig miteinander verbunden. Die drei Dichtungsanordnungen sind in axialer Richtung mittels ihrer Axialvorsprünge 13 aufeinander geschoben und können dadurch als Einheit einfach und platzsparend verpackt werden.

## Patentansprüche

1. Dichtungsanordnung, umfassend einen Dichtring (1), der stirnseitig einerseits (2) eine erste Dichtlippe (3) aufweist, die eine Durchbrechung (4) umschließt, wobei die Durchbrechung (4) von einem Verschlussdeckel (5) verschlossen ist und wobei der Verschlussdeckel (5) der ersten Dichtlippe (3) unmittelbar benachbart zugeordnet ist, **dadurch gekennzeichnet, dass** die erste Dichtlippe (3) den Verschlussdeckel (5) ohne elastische Vorspannung lose anliegend berührt.

2. Dichtungsanordnung nach Anspruch 1, **dadurch gekennzeichnet, dass** der Verschlussdeckel (5) und der Dichtring (1) zerstörungsfrei lösbar miteinander verbunden sind.

3. Dichtungsanordnung nach einem der Ansprüche 1 oder 2, **dadurch gekennzeichnet, dass** der Verschlussdeckel (5) und der Dichtring (1) formschlüssig miteinander verbunden sind.

4. Dichtungsanordnung nach einem Ansprüche 1 bis 3, **dadurch gekennzeichnet, dass** der Dichtring (1) einen sich in axialer Richtung erstreckenden Axialflansch (6) aufweist, der den Verschlussdeckel (5) außenumfangsseitig umschließt und zumindest einen sich radial nach innen erstreckenden Rastvorsprung (7) aufweist, der zumindest in eine Hinterschneidung (8) des Verschlussdeckels (5) einschnappbar ist.

5. Dichtungsanordnung nach Anspruch 4, **dadurch gekennzeichnet, dass** der Axialflansch (6) in Montagerichtung (9) des Verschlussdeckels (5) eine Einführschräge (10) aufweist.

6. Dichtungsanordnung nach einem der Ansprüche 1 bis 5, **dadurch gekennzeichnet, dass** der Verschlussdeckel (5) einen Radialflansch (11) aufweist, mit dem der Verschlussdeckel (5) im Axialflansch (6) des Dichtrings (1) gehalten ist und dass der Radialflansch (11) der ersten Dichtlippe (3) mit einem ersten axialen Abstand (12) = 0 benachbart zugeordnet ist

7. Dichtungsanordnung nach einem der Ansprüche 1 bis 6, **dadurch gekennzeichnet, dass** die erste Dichtlippe (3) aus einem polymeren Werkstoff besteht.

8. Dichtungsanordnung nach einem Ansprüche 1 bis 7, **dadurch gekennzeichnet, dass** die erste Dichtlippe (3) aus PTFE besteht und herstellungsbedingt eben und kreisringförmig ausgebildet ist und sich parallel zum Radialflansch (11) erstreckt.

9. Dichtungsanordnung nach einem der Anspruche 6 bis 8, **dadurch gekennzeichnet, dass** der Radialflansch (11) auf der der ersten Dichtlippe (3) axial abgewandten Seite einen Axialvorsprung (13) aufweist, auf den eine weitere entsprechend ausgebildete Dichtungsanordnung gleichen Typs kraftschlüssig aufschiebbar ist

10. Dichtungsanordnung nach einem der Ansprüche 1 bis 9, **dadurch gekennzeichnet, dass** der Dichtring (1) als Radialwellendichtring ausgebildet ist, mit einem Stützkörper (14) aus einem zähharten Werkstoff, der stirnseitig andererseits (15) mit einer dynamisch beanspruchten zweiten Dichtlippe (16) aus elastomerem Werkstoff verbunden ist und dass sich die erste Dichtlippe (3) und die zweite Dichtlippe (16) mit einem zweiten axialen Abstand (17) benachbart zugeordnet sind.

## Claims

1. Seal arrangement, comprising a sealing ring (1) which, on the end side at one end (2), has a first sealing lip (3) which surrounds an aperture (4), wherein the aperture (4) is closed by a closure cover (5), and wherein the closure cover (5) is assigned directly adjacent to the first sealing lip (3), **characterized in that** the first sealing lip (3) touches the closure cover (5) in a loosely contacting manner without elastic prestressing.

2. Seal arrangement according to Claim 1, **characterized in that** the closure cover (5) and the sealing ring (1) are connected to each other so as to be releasable without being destroyed.

3. Seal arrangement according to either of Claims 1 and 2, **characterized in that** the closure cover (5) and the sealing ring (1) are connected to each other in a form-fitting manner.

4. Seal arrangement according to one of Claims 1 to 3, **characterized in that** the sealing ring (1) has an axial flange (6) which extends in the axial direction, surrounds the closure cover (5) on the outer circumferential side and has at least one latching projection (7) which extends radially inwards and can be snapped at least into an undercut (8) of the closure cover (5).

5. Seal arrangement according to Claim 4, **characterized in that** the axial flange (6) has an insertion slope (10) in the installation direction (9) of the closure cover (5).

6. Seal arrangement according to one of Claims 1 to 5, **characterized in that** the closure cover (5) has a radial flange (11) with which the closure cover (5) is held in the axial flange (6) of the sealing ring (1), and **in that** the radial flange (11) is assigned adjacent to the first sealing lip (3) at a first axial distance (12) = 0.

7. Seal arrangement according to one of Claims 1 to 6, **characterized in that** the first sealing lip (3) is composed of a polymeric material.

8. Seal arrangement according to one of Claims 1 to 7, **characterized in that** the first sealing lip (3) is composed of PTFE and is caused by production to be of planar and circular-ringshaped design and extends parallel to the radial flange (11).

9. Seal arrangement according to one of Claims 6 to 8, **characterized in that** that side of the radial flange (11) which faces away axially from the first sealing lip (3) has an axial projection (13) onto which a further, correspondingly designed seal arrangement of the same type can be pushed in a frictional manner.

10. Seal arrangement according to one of Claims 1 to 9, **characterized in that** the sealing ring (1) is designed as a radial shaft sealing ring, with a supporting body (14) of a hard material which, on the end side at the other end (15), is connected to a dynamically stressed, second sealing lip (16) of elastomeric material, and **in that** the first sealing lip (3) and the second sealing lip (16) are assigned adjacent to each other at a second axial distance (17).

## Revendications

1. Agencement d'étanchéité, comprenant une bague d'étanchéité (1), qui présente côté frontal sur un côté (2) une première lèvre d'étanchéité (3), qui entoure un passage (4), dans lequel le passage (4) est fermé par un couvercle de fermeture (5) et dans lequel le couvercle de fermeture (5) est associé à proximité immédiate à la première lèvre d'étanchéité (3), **caractérisé en ce que** la première lèvre d'étanchéité (3) touche le couvercle de fermeture (5) en application libre sans précontrainte élastique.

2. Agencement d'étanchéité selon la revendication 1, **caractérisé en ce que** le couvercle de fermeture (5) et la bague d'étanchéité (1) sont assemblés l'un à l'autre de façon séparable sans destruction.

3. Agencement d'étanchéité selon l'une quelconque des revendications 1 ou 2, **caractérisé en ce que** le couvercle de fermeture (5) et la bague d'étanchéité (1) sont assemblés l'un à l'autre par emboîtement.

4. Agencement d'étanchéité selon l'une quelconque des revendications 1 à 3, **caractérisé en ce que** la bague d'étanchéité (1) présente une bride axiale (6) s'étendant en direction axiale, qui entoure le couvercle de fermeture (5) du côté de sa périphérie extérieure et présente au moins une saillie d'encliquetage (7) s'étendant radialement vers l'intérieur, qui peut être encliquetée au moins dans une contre-dépouille (8) du couvercle de fermeture (5).

5. Agencement d'étanchéité selon la revendication 4, **caractérisé en ce que** la bride axiale (6) présente un chanfrein d'introduction (10) dans la direction de montage (9) du couvercle de fermeture (5).

6. Agencement d'étanchéité selon l'une quelconque des revendications 1 à 5, **caractérisé en ce que** le couvercle de fermeture (5) présente une bride radiale (11), avec laquelle le couvercle de fermeture (5) est maintenu dans la bride axiale (6) de la bague d'étanchéité (1) et **en ce que** la bride radiale (11) est associée à la première lèvre d'étanchéité (3) de près avec une première distance axiale (12) = 0.

7. Agencement d'étanchéité selon l'une quelconque des revendications 1 à 6, **caractérisé en ce que** la première lèvre d'étanchéité (3) est constituée d'un matériau polymère.

8. Agencement d'étanchéité selon l'une quelconque des revendications 1 à 7, **caractérisé en ce que** la première lèvre d'étanchéité (3) se compose de PTFE et est, par sa fabrication, plane et annulaire circulaire et s'étend parallèlement à la bride radiale (11).

9. Agencement d'étanchéité selon l'une quelconque des revendications 6 à 8, **caractérisé en ce que** la bride radiale (11) présente, sur le côté axialement éloigné de la première lèvre d'étanchéité (3), une saillie axiale (13) sur laquelle un autre agencement d'étanchéité du même type, configuré de manière correspondante, peut être engagé par friction.

10. Agencement d'étanchéité selon l'une quelconque des revendications 1 à 9, **caractérisé en ce que** la bague d'étanchéité (1) est réalisée sous la forme d'un joint d'arbre radial, avec un corps d'appui (14) en un matériau tenace, qui est assemblée côté frontal sur l'autre côté (15) avec une deuxième lèvre d'étanchéité (16) sollicitée de façon dynamique en matériau élastomère, et **en ce que** la première lèvre d'étanchéité (3) et la deuxième lèvre d'étanchéité (16) sont disposées à proximité avec une deuxième distance axiale (17).
